# EUROPEAN PATENT SPECIFICATION

(11) **EP 0 282 015 B1**
(45) Date of publication and mention of the grant of the patent: **07.06.1995**
(21) Application number: 88103653.7
(22) Date of filing: 09.03.1988
(51) Int. Cl.: B32B 27/00, B32B 33/00, B65D 79/00, H05B 6/64

(54) **Microwave interactive film, microwave interactive laminate and method for producing microwave interactive laminate**
Mikrowellenempfindlicher Film, mikrowellenempfindliches Laminat und Verfahren zur Herstellung dieses Laminates
Pellicule sensible aux micro-ondes, laminé sensible aux micro-ondes et procédé pour fabriquer ce laminé

(30) Priority: 10.03.1987 US 24063
(43) Date of publication of application: 14.09.1988
(73) Proprietor: JAMES RIVER CORPORATION, Richmond VA 23217 (US)
(72) Inventor: Hollenberg, David H., Neenah Wisconsin (US); Katz, Leon, Norwalk, CT (US)
(74) Representative: Schupfner, Gerhard D.

(56) References cited:
- EP-A- 0 205 304
- EP-A- 0 205 304
- FR-A- 2 451 182
- GB-A- 2 202 118

## Description

The present invention relates to a microwave interactive film comprising a heat stable plastic film coated with a layer of microwave interactive material to form said microwave interactive film with a deactivated area or areas having a reduced capability to generate heat in response to microwave radiation and a heating area or areas having an unaltered capability to generate heat in response to microwave radiation arranged in a predetermined pattern. The present invention also relates to a method of forming a microwave interactive laminate heater element including said microwave interactive film, such heater elements and to a container including such laminate heater elements for the storage and microwave cooking of food.

A characteristic of microwave cooking is that the exterior of foods cooked in a microwave oven, such as breads, do not have a brown or crisp texture desired by consumers.

One technique developed to brown or crisp the exterior of foods during microwave cooking has been the incorporation of a lossy or microwave interactive material into packages which contain foods. When subjected to microwave energy, the microwave interactive material generates heat which browns or crisps the surface of food.

A film with a microwave interactive layer deposited on one side is a microwave interactive film. Microwave interactive films suitable for use in the present invention are commercially available and are well known to those skilled in the art.

A microwave interactive laminate heater element may be formed by bonding an interactive film to a substrate support structure preferably with the microwave interactive layer sandwiched between the film and the substrate. The laminate heater element may be subsequently cut into a shape that approximates the shape of a particular food product or the size of a particular package.

Commercially, microwave interactive laminate heater elements can be most conveniently cut into rectangles for use in packages. When the food product which is to be heated is circular, triangular or some other shape which does not conform to a rectangle,not all of the heat-generating area of the microwave interactive laminate heater element will be covered by the food product. The uncovered or exposed area of conventional microwave interactive laminate heater element can produce excessive heat which can scorch the food or the container and reduce the efficiency of the microwave interactive laminate heater element.

With conventional microwave interactive laminate heater elements, the heat-generating areas may overlap when a package is assembled resulting in excessive heat generation at the areas of overlap, which can scorch the food or the package as well.

It is an object of this invention to so define heating area of the laminate heater element as to avoid overlapping of heat-generating areas in an assembled package and to provide heat generating areas of the laminate heater element in those regions best suited to heating the contents of the container.

EP-A-0 205 304 discloses microwave interactive laminates in which a portion of the metallized polymeric film selectively demetallized by etching chemicals with removal of the microwave interactive material while leaving intact discrete metallized regions of microwave interactive material.

According to the present invention a microwave interactive film is provided which is characterized in that the reduced capability of deactivated area or areas to generate heat in response to microwave radiation is produced by chemically reducing or eliminating the microwave interactive properties of an area or areas of microwave interactive layer with an inactivating chemical without removing the inactivating chemical or the inactivated material of the microwave interactive layer, the inactivating chemical being selected from the group consisting of aqueous solutions of chelating agents, Zr⁺⁴ salts, amines and hydroxyamines, dilute bases, dilute acids, aqueous solutions of metal salts, and mixtures thereof, followed by drying.

A further embodiment of the present invention is a microwave interactive laminate heater element, comprising,
(a) a microwave interactive film as defined above, having a heating area and an inactivated area wherein the capability of the inactivated area to generate heat in response to microwave energy has been reduced by said inactivating chemical; and,
(b) a substrate layer bonded to said microwave interactive film to form a microwave interactive laminate, wherein the microwave interactive material is between the film layer and the substrate layer.

A further embodiment of the present invention is a method of forming a microwave interactive laminate heater element, having a microwave interactive film selectively responsive to microwave radiation for use in the microwave cooking of food products having portions that require browning or heating to different degrees, said method including the steps of:
(a) depositing a thin layer of microwave interactive material on one side of a heat stable plastic film,
(b) treating a selected area of said thin layer with an inactivating chemical in an amount sufficient to convert the selected area into an inactivated area with reduced capability of generating heat in response to microwave energy; and
(c) bonding the microwave interactive film treated in accordance with step (b) to a substrate layer to place said thin layer between said heat stable film and said substrate layer.

Figure 1 is a sectional view along the plane 2-2 of Figure 2 of a microwave interactive laminate in accordance with the present invention illustrating heating and inactivated areas.

Figure 2 is a cross-sectional view along plane 1-1 of figure 1, distorted in the vertical dimension to show detail of a microwave interactive laminate as illustrated in Figure 1 along line 1-1.

Figure 3 is a schematic representation of apparatus which may be used to produce a microwave interactive laminate in accordance with the present invention.

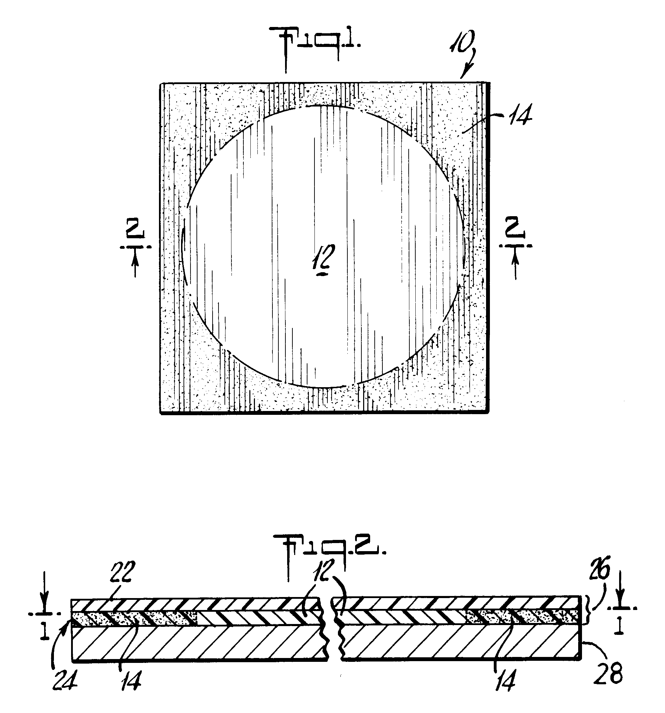

One embodiment of the present invention, illustrated with reference to Figure 1, is a microwave interactive laminate heater element 10 having an active heating area 12 and an inactivated area 14.

A selected area of a microwave interactive material is chemically modified, corresponding to inactivated area 14, as explained in detail hereinafter, thereby reducing or eliminating its ability to generate heat in response to microwave energy without impairment of the untreated heating area 12 of the microwave interactive material.

In the embodiment of the invention illustrated in Figure 1, the unmodified heating area 12 is circular to approximate the shape of a circular food product, such as a pizza. In use, the food product normally will cover heating area 12 when the food is placed in a package provided with the microwave interactive film or laminate 10. The area of the microwave interactive layer corresponding to heating area 12 will generate heat in response to microwave energy, preferably an amount sufficient to heat to brown or crisp the surface of food product placed in or on the package.

The location of the heating area in a package or container may be on any surface of the package or container where heat for browning or crisping the food is desired. The heating area may be therefore, at the bottom interior surface, on the top interior surface, on the vertical interior surfaces or top exterior surface of a container, depending on where the heat for browning or crisping food is desired and the kind of container involved.

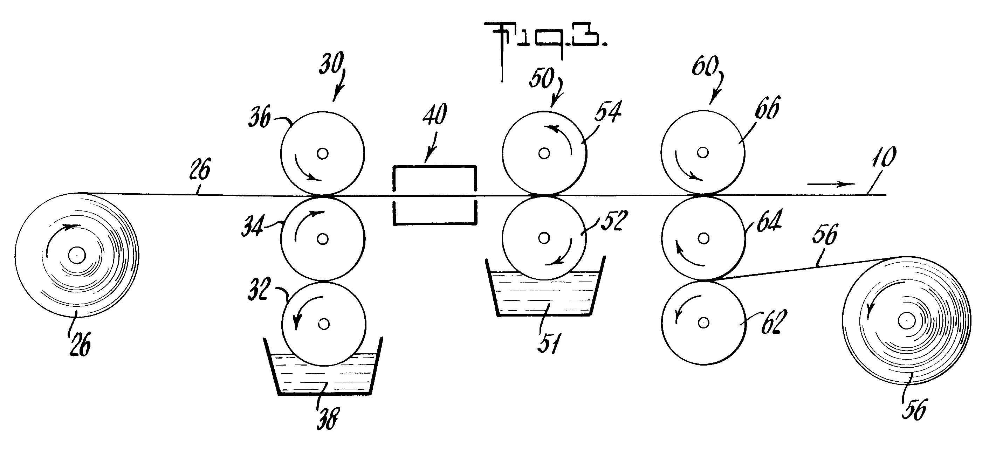

Figure 2 illustrates the layers making up microwave interactive laminate heater element 10. It will be understood that the dimensions of the layers illustrated in Figure 2 are exaggerated for purposes of illustration and are not necessarily in correct proportion to one other.

With reference to Figure 2, film 22 is a heat tolerant and heat stable material. Immediately adjacent film 22 is microwave interactive layer 24 which is a thin layer of material capable of generating heat in response to microwave energy. In the embodiment illustrated in Figure 2, a selected area of the microwave interactive layer 24 has been chemically treated to form inactivated area 14. By converting the selected area 14 into an inactivated area 14 by chemical treatment in accordance with the present invention, the shape and heating characteristics of heating area 12 may be precisely controlled. The microwave interactive layer 24 is usually vacuum vapor deposited onto one side of film 22 by means known in the art to form microwave interactive film 26 consisting of film 22 and layer 24.

Other known methods for depositing a microwave interactive layer 24 onto a film layer 22, for example by sputtering or printing, may be used. As illustrated in Figure 2, a selected area of the microwave interactive layer 24 is inactivated by treatment with an inactivating chemical without removing the microwave interactive layer 24. After the treating step, the microwave interactive film 26, is bonded to substrate layer 28 with an appropriate adhesive. Substrate layer 28 provides laminate 10 with structural rigidity and a fixed shape which conforms to the shape of a package into which the microwave interactive laminate heater element 10 will be incorporated.

The film 22 serves as a stock material onto which microwave interactive layer 24 is deposited to form microwave interactive film 26 consisting of film 22 and layer 24. Film 22 also separates a food product resting on top of laminate heater element 10 from the microwave interactive layer 24 and the substrate layer 28. The film 22 must be sufficiently stable at high temperatures when laminated to substrate layer 28 so that it will not degrade during the operation of a microwave oven at temperatures selected for cooking the desired food. Suitable materials for use as a film layer include, but are not limited to, films such as polyesters, polyolefins, nylon, cellophane, polysulphone, biaxially oriented polyester and other relatively stable plastics. It has been found that biaxially oriented polyester is a preferred material for most food containers because of its heat stability and its surface smoothness.

The microwave interactive layer 24 is preferably deposited onto one side of film 22 by a vacuum vapor deposition technique. The side of film 22 onto which the microwave interactive material is deposited will face away from the food product in a container. Sputtering, printing or other techniques, which are known to those skilled in the art, may also be used to deposit a layer of lossy material which interacts with microwave energy onto one side of protective film 22.

Any suitable lossy substance that will generate heat in a microwave oven may be used as the microwave interactive material. These materials fall primarily into four groups: conductors, semiconductors, ferromagnetic materials and dielectric materials. Any of these materials which convert microwave radiation into heat energy may be used in the present invention. Preferred microwave interactive materials useful in the present invention to form microwave interactive layer 24 are those selected from the group aluminum, iron, nickel, copper, silver, carbon, stainless steel, nichrome, magnetite, zinc, tin, tungsten and titanium. These materials may be used in a powder, flake or fine particle form. The microwave interactive materials may be used alone or in combination with each other. The most preferred material for many applications of the present invention is aluminum metal.

The microwave interactive layer 24 is very thin. For instance, when aluminum is the microwave interactive material, it is virtually impossible to mechanically measure the exact thickness of microwave interactive layer 24 with presently known instruments. In general, the thickness of vacuum vapor deposited layers of electrically conductive material is measured in terms of the optical density of the conductive layer itself. Microwave interactive layers used in microwave cooking are so thin that after they are deposited on transparent film, the microwave interactive film made up of film 22 and microwave interactive layer 24 may be seen through by the human eye.

A variety of chemicals may be used to reduce or eliminate the heat-generating capability of microwave interactive layer 24. It has been found that aqueous solutions of chelating agents, Zr⁺⁴ salts, amines and hydroxyamines, dilute bases and dilute acids, aqueous solutions of metal salts, and mixtures thereof are useful in reducing or eliminating the microwave interactive properties of microwave interactive layer 24. Examples of chelating agents are ethylenediaminetetraacetic acid (EDTA), diethylenetriaminepentaacetic (DTPA) and hydroxyethylenediaminetriacetic acid (HOEDTA). Solutions of Zr⁺⁴ useful in the present invention may include ammonium zirconium carbonate, sodium zirconium lactate, ammonium zirconium lactate, and zirconium tartrate.

Examples of amines and hydroxyamines useful in the present invention are selected from the group consisting of ethanolamine, diethanolamine, triethanolamine, choline and salts of the ethanolamines and choline. Acids useful in the present invention include acetic, formic, citric, tartaric, oxalic, succinic and other organic acids as well as dilute mineral acids, for example hydrochloric acid, hydrofluoric acid and mixtures thereof. Examples of dilute bases useful in the present invention include potassium hydroxide, sodium hydroxide, lithium hydroxide, sodium and potassium carbonates, and sodium and potassium phosphates. Solutions of salts such as ferric chloride, sodium citrate, sodium tartrate, ferric sulphate, ferrous chloride, ferrous ammonium sulphate, ammonium fluoride, sodium fluoride, zinc chloride, zinc oxide and zinc fluoride are examples of salt solutions useful in the present invention.

In general, sodium hydroxide is the preferred material used to treat microwave interactive layer 24 in accordance with the present invention, particularly when aluminum metal is the microwave interactive material making up the microwave interactive layer 24. The pH of solutions of sodium hydroxide used to inactivate portions of the microwave interactive layer 24 preferably ranges from about 7.5 to about 13 and is more preferably maintained in the range of about 8.5 to about 11. For a commercial process, the sodium hydroxide solution used to treat an aluminum microwave interactive layer is at room temperature although the temperature may be higher or lower than normal room temperature.

It is generally also adventageous to add a small amount of surfactant to solutions of an incativating chemical used to treat the microwave interactive layer to improve the wetting characteristics of the chemical and the subsequent reaction of the chemical with the microwave interactive layer. Examples of surfactants which may be used include CERFAK 1400^{R} produced by E.F. Houghton, KATAMUL-1G^{R} produced by Scher Chemicals, Inc., IGEPAL-CO630^{R} produced by GAF Corporation and TRITON X-100^{R} produced by Rohm & Haas. A surfactant preferred for use in conjunction with sodium hydroxide is TRITON X-100^{R}.

The mechanism by which chemicals modify treated portions of the microwave interactivate layer without removing the layer is not known for every possible combination of chemical and microwave interactive material. It is believed, however, that aluminum is inactivated by a variety of chemicals which oxidize aluminum metal. It is possible, however, that different chemicals will inactivate the microwave interactive layer by different mechanisms. Coordination, chelation, oxidation/reduction and/or formation of salts of the microwave interactive material may contribute to or cause inactivation of aluminum and other suitable lossy materials.

The substrate layer 28 may be made of a variety of materials but is preferably formed of a low density material having a relatively high electrical insulating capacity and a heat stability sufficient to withstand cooking temperatures in a microwave oven. Suitable substrate materials include, but are not limited to, paperboard, papers, plastics, plastic films, ceramics and a wide variety of composite materials such as fiber/polymer composites. A preferred material for use in disposable packages for prepared foods is paperboard.

A process, illustrated with reference to Figure 3, used to make microwave interactive laminates in accordance with the present invention, may be conducted by first providing a continuous roll of microwave interactive film 26 comprising film 22 and microwave interactive layer 24. As explained above, microwave interactive film 26 can be formed by depositing microwave interactive material in a layer onto one side of the film.

At treating station 30 the microwave interactive layer 24 (not shown in Figure 3) of the microwave interactive film 26 is treated with an inactivating chemical 38 by equipment illustrated by rollers 32, 34 and 36 which applies inactivating chemical 38, preferably as an aqueous solution or dispersion onto a selected area or areas of the microwave interactive layer. Inactivation chemical 38 interacts with the microwave interactive material of the selected area and converts the selected area into an inactivated area (14 in Figure 2). The inactivating chemical 38 reduces the capability of the selected area of the microwave interactive layer to generate heat in response to microwave energy.

Conventional printing techniques, for example rotogravure, flexography and lithography, may be used to treat the selected area of the microwave interactive layer with inactivating chemical 38. The printing techniques used may be conducted with equipment which is well known to those of ordinary skill in the art. Flexographic printing is preferred for many applications of the present invention.

After the inactivating chemical 38 has been printed onto the microwave interactive layer, the microwave interactive film is dried at drying station 40 with any conventional drier or driers, such as hot air driers, infrared heating driers, or steam heated rolls.The microwave interactive film 26 is dried after printing with chemicals 38 without removing the inactivating chemical or the inactivated material of the microwave interactive layer.

After drying, adhesive 51 is preferably applied to the treated microwave interactive film 26 at station 50 by equipment illustrated by rollers 52, 54. Alternatively, the adhesive 51 may be applied to substrate 56 rather than, or in addition to, the treated microwave interactive film 26. A variety of adhesives may be used to bond the microwave interactive film to the substrate. Adhesives found useful in the present invention include water based acrylic emulsions and casein neoprene emulsions.

After adhesive has been applied, the treated microwave interactive film 26 is continuously bonded to substrate 56 at station 60 by equipment illustrated by rollers 62, 64 and 66 to form microwave interactive laminate 10 of the present invention.

Only selected areas of the microwave interactive film 26 are inactivated by inactivating chemical 38, forming a shaped heating area, for example, activated area 12 illustrated in Figures 1 and 2.

The method of the present invention is further illustrated with the following example.

### EXAMPLE

In this example, a selected area of an aluminum microwave interactive layer of a microwave interactive film was treated with a solution of sodium hydroxide (NaOH). The viscosity of a 1 normal NaOH solution was adjusted with a small quantity of neutralized ACRYSOL^{R}-A5, a polyacrylic acid solution produced by Rohm & Haas. A sufficient quantity of neutralized ACRYSOL^{R}-A5 was added to provide a viscosity of 20 seconds on a number two Shell cup. After the viscosity of the NaOH solution was adjusted, approximately 0,08 grams of TRITONEX 100^{R} Surfactant were added per liter of NaOH solution. Finally, isopropyl alcohol was added to the NaOH solution in an amount equivalent to about 7 % by weight of the NaOH and alcohol solution. A flexographic printing press was then used to print the sodium hydroxide solution onto selected areas of the aluminum microwave interactive layer. The amount of sodium hydroxide solution printed onto the selected areas of the aluminum microwave interactive layer was controlled by a 200 quad transfer roll. The treated microwave interactive film was then heated by contacting the microwave interactive laminate with the warm surface of a central impression drum of a printing press. An adhesive was then applied to a paperboard substrate and the microwave interactive film material was laminated (bonded) onto the paperboard substrate. The microwave interactive laminate formed as described above did not generate heat in response to microwave energy in a microwave oven and did not exhibit electrical conductivity.

Because the microwave interactive layer formed in accordance with the present invention generates heat only at the area or areas selected as the heating area or areas, the microwave interactive laminate heater element does not have to be cut to the approximate shape of the food product prior to bonding to a package. This can lower package production time. Moreover, the control provided by the present invention over the shape of the heating area can be used to provide areas of heat-generating microwave interactive laminate heater element where it is desired for a particular end use. In addition, overlap between heat-generating microwave interactive layers, which can occur when a package or container is assembled, can be avoided by inactivating selected areas of the microwave interactive layer that will overlap when the package or container is assembled.

A variety of improved packages or containers can incorporate microwave interactive laminate heater elements made in accordance with the present invention. With the present invention, for instance, pizza packages or pizza trays may be provided with a microwave interactive laminate heater element having all areas of the microwave interactive layer, which are not covered by the pizza, inactivated. This focuses the heat from the microwave interactive layer where it is needed to brown and crisp the pizza crust.

It is also sometimes desirable to provide pressed trays and plates which are not microwave interactive at the brim, sides or selected areas of the bottom of a tray or plate for performance or handling reasons. With the present invention, pressed trays and plates can be provided with a microwave interactive laminate heater element in which inactivated areas of the microwave interactive layer correspond only to areas at which heating is not desired.

In addition, stripes of the microwave interactive layer may be inactivated to provide a grid pattern of alternating activated and inactivated areas. This grid pattern decreases the amount of heat that will be generated over the grid area as a whole.

## Claims

1. A microwave interactive film comprising a heat stable plastic film (22) coated with a layer of microwave interactive material (24) to form said microwave interactive film (26) with a deactivated area or areas (14) having a reduced capability to generate heat in response to microwave radiation and a heating area or areas (12) having an unaltered capability to generate heat in response to microwave radiation arranged in a predetermined pattern
**characterized in that**
the reduced capability of deactivated area or areas (14) to generate heat in response to microwave radiation is produced by chemically reducing or eliminating the microwave interactive properties of an area or areas of microwave interactive layer (24) with an inactivating chemical without removing the inactivating chemical or the inactivated material of the microwave interactive layer (24), the inactivating chemical being selected from the group consisting of aqueous solutions of chelating agents, Zr⁺⁴ salts, amines and hydroxyamines, dilute bases, dilute acids, aqueous solutions of metal salts, and mixtures thereof, followed by drying.

2. A microwave interactive film of claim 1 wherein as inactivating chemicals the chelating agents are selected from the group consisting of ethylenediaminetetraacetic acid, diethylenetriaminepentacetic acid and hydroxyethylenediaminetriacetic acid; the Zr⁺⁴ salts are selected from the group consisting of ammonium zirconium carbonate, sodium zirconium lactate, ammonium zirconium lactate and zirconium tartrate; the amines and hydroxyamines are selected from the group consisting of ethanolamine, diethanolamine, triethanolamine, choline and salts of the ethanolamines and choline; wherein said dilute bases are selected from the group consisting of potassium hydroxide, sodium hydroxide, lithium hydroxide, sodium and potassium carbonates and sodium and potassium phosphates; the dilute acids are selected from the group consisting of acetic, formic, hydrochloric, hydrofluoric, citric, tartaric, oxalic and succinic acids and salts thereof; and the said metal salts are selected from the group consisting of ferric chloride, ferric sulphate, ferrous chloride, ferrous ammonium sulphate, ammonium fluoride, sodium fluoride, zinc chloride, zinc oxide and zinc fluoride.

3. A microwave interactive film of claim 1 or claim 2, wherein said deactivated area or areas (14) are arranged alternately with said heating area or areas (12) in a grid pattern.

4. A microwave interactive film of any of claims 1 to 3 wherein said microwave interactive material is selected from the group consisting of iron, nickel, copper, silver, carbon, stainless steel, nichrome, magnetite, zinc, tin, tungsten, titanium and aluminum.

5. A microwave interactive laminate comprising a microwave interactive film as defined in any of the preceding claims wherein microwave interactive film (26) is supported on a substrate layer (28), substrate layer (28) being bonded to film (26) such that layer of microwave interactive material (24) is between film (22) and substrate layer (28).

6. A microwave interactive laminate of claim 5 wherein substrate layer (28) is selected from the group consisting of paperboard, papers and fiber/polymer composites.

7. A microwave interactive laminate of any of claims 5 or 6 wherein said substrate layer is bonded to said microwave interactive film with an adhesive selected from the group consisting of water-based acrylic emulsions and casein neoprene emulsions.

8. A microwave interactive laminate, according to any of claims 5 to 7, for insertion into a container intended for the storage and cooking by microwave energy of a food product contained therein.

9. A method of forming a microwave interactive laminate heater element including a microwave interactive film of any of claims 5 to 8 selectively responsive to microwave radiation for use in the microwave cooking of food products having portions that require browning or heating to different degrees, said method including the steps of:
(a) depositing a thin layer of microwave interactive material on one side of a heat stable plastic film;
(b) treating a selected area of said thin layer with an inactivating chemical in an amount sufficient to convert said selected area into an inactivated area with reduced capability of generating heat in response to microwave energy; and
(c) bonding said microwave interactive film treated in accordance with step (b), to said substrate layer to place said thin layer between said heat stable plastic film and said substrate layer.

10. A method as defined in claim 9 wherein said microwave interactive film is bonded to said substrate layer in a continuous process in-line with said treating step (b).

11. A method as defined in claim 9 or 10 wherein said inactivating chemical includes a surfactant.

12. A method as defined in any of the claims 9 to 11 wherein said inactivating chemical is printed onto said thin layer by a process selected from rotogravure, flexographic and lithographic techniques.

13. A method as defined in claim 12 wherein said inactivating chemical is printed onto said thin layer with a flexographic printing technique.

14. A container for packaging several different foods, storing said foods and cooking said foods by microwave energy, said container including microwave interactive laminate heater elements having microwave interactive films according to any of the claims 1 to 4 wherein the pattern of the deactivated and heating areas (14,12) is selected to produce the optimum temperature required to brown or crisp each food.

## Patentansprüche

1. Mikrowelleninteraktive Folie, die eine wärmestabile Kunststoffolie (22) aufweist, die mit einer Schicht aus mikrowelleninteraktivem Material (24) beschichtet ist, um die mikrowelleninteraktive Folie (26) zu bilden, die einen desaktivierten Bereich oder solche Bereiche (14) mit verminderter Fähigkeit zur Wärmeerzeugung aufgrund von Mikrowellenstrahlung und einen Heizbereich oder Heizbereiche (12) hat, die eine unveränderte Fähigkeit zur Wärmeerzeugung aufgrund von Mikrowellenstrahlung haben, wobei die Bereiche in einem vorbestimmten Muster angeordnet sind,
**dadurch gekennzeichnet,**
daß die herabgesetzte Fähigkeit des desaktivierten Bereichs oder der Bereiche (14) zur Wärmeerzeugung aufgrund von Mikrowellenstrahlung produziert wird durch chemische Verminderung oder Beseitigen der mikrowelleninteraktiven Eigenschaften eines Bereichs oder von Bereichen der mikrowelleninteraktiven Schicht (24) mit einer inaktivierenden Chemikalie, ohne die inaktivierende Chemikalie oder das inaktivierte Material der mikrowelleninteraktiven Schicht (24) zu entfernen, wobei die inaktivierende Chemikalie aus der Gruppe ausgewählt ist, die aus wäßrigen Lösungen von Chelatbildnern, Zr⁺⁴-Salzen, Aminen und Hydroxyaminen, verdünnten Basen, verdünnten Säuren, wäßrigen Lösungen von Metallsalzen und Gemischen daraus besteht, gefolgt von Trocknen.

2. Mikrowelleninteraktive Folie nach Anspruch 1, wobei als inaktivierende Chemikalien die Chelatbildner aus der Gruppe ausgewählt sind, die aus Ethylendiamintetraessigsäure, Diethylentriaminpentaessigsäure und Hydroxyethylendiamintriessigsäure besteht; die Zr⁺⁴-Salze aus der Gruppe ausgewählt sind, die aus Ammoniumzirconiumcarbonat, Natriumzirconiumlactat, Ammoniumzirconiumlactat und Zirconiumtartrat besteht; die Amine und Hydroxyamine aus der Gruppe ausgewählt sind, die aus Ethanolamin, Diethanolamin, Triethanolamin, Cholin und Salzen der Ethanolamine und von Cholin besteht; wobei die verdünnten Basen aus der Gruppe ausgewählt sind, die aus Kaliumhydroxid, Natriumhydroxid, Lithiumhydroxid, Natrium- und Kaliumcarbonaten und Natrium- und Kaliumphosphaten besteht; die verdünnten Säuren aus der Gruppe ausgewählt sind, die aus Essig-, Ameisen-, Salz-, Fluß-, Zitronen-, Weinstein-, Oxal- und Bernsteinsäure und den Salzen davon besteht; und die Metallsalze aus der Gruppe ausgewählt sind, die aus Eisen(III)-chlorid, Eisen(III)-sulfat, Eisen(II)-chlorid, Ammoniumeisen(II)-sulfat, Ammoniumfluorid, Natriumfluorid, Zinkchlorid, Zinkoxid und Zinkfluorid besteht.

3. Mikrowelleninteraktive Folie nach Anspruch 1 oder Anspruch 2, wobei der desaktivierte Bereich oder die Bereiche (14) alternierend mit dem Heizbereich oder den Heizbereichen (12) in einer Gitterstruktur angeordnet sind.

4. Mikrowelleninteraktive Folie nach einem der Ansprüche 1-3, wobei das mikrowelleninteraktive Material aus der Gruppe ausgewählt ist, die aus Eisen, Nickel, Kupfer, Silber, Kohlenstoff, rostfreiem Stahl, Nichrom, Magnetit, Zink, Zinn, Wolfram, Titan und Aluminium besteht.

5. Mikrowelleninteraktives Laminat, das eine mikrowelleninteraktive Folie nach einem der vorhergehenden Ansprüche aufweist, wobei mikrowelleninteraktive Folie (26) auf einer Substratschicht (28) getragen ist und die Substratschicht (28) mit der Folie (26) gebondet ist, so daß die Schicht aus mikrowelleninteraktivem Material (24) zwischen der Folie (22) und der Substratschicht (28) liegt.

6. Mikrowelleninteraktives Laminat nach Anspruch 5, wobei die Substratschicht (28) aus der Gruppe ausgewählt ist, die aus Pappe, Papieren und Faser/Polymer-Verbundstoffen besteht.

7. Mikrowelleninteraktives Laminat nach einem der Ansprüche 5 oder 6, wobei die Substratschicht mit der mikrowelleninteraktiven Folie durch einen Klebstoff gebunden ist, der aus der Gruppe ausgewählt ist, die aus Acrylemulsionen auf Wasserbasis und Kasein-Neoprenemulsionen besteht.

8. Mikrowelleninteraktives Laminat nach einem der Ansprüche 5 bis 7 zum Einlegen in einen Behälter, der zur Aufbewahrung und zum Erhitzen eines darin enthaltenen Nahrungsmittelprodukts durch Mikrowellenenergie bestimmt ist.

9. Verfahren zum Herstellen eines mikrowelleninteraktiven Laminatheizelements, das eine mikrowelleninteraktive Folie nach einem der Ansprüche 5 bis 8 aufweist, die auf Mikrowellenstrahlung selektiv anspricht, zur Verwendung beim Mikrowellenerhitzen von Nahrungsmittelprodukten, die Bereiche haben, die Bräunen oder unterschiedlich starke Erhitzung verlangen, wobei das Verfahren die folgenden Schritte aufweist:
(a) Aufbringen einer dünnen Schicht von mikrowelleninteraktivem Material auf eine Seite einer wärmestabilen Kunststoffolie;
(b) Behandeln eines ausgewählten Bereichs der dünnen Schicht mit einer inaktivierenden Chemikalie in einer ausreichenden Menge, um den ausgewählten Bereich in einen inaktivierten Bereich mit verminderter Fähigkeit zur Erzeugung von Wärme aufgrund von Mikrowellenenergie umzuwandeln; und
(c) Binden der gemäß Schritt (b) behandelten mikrowelleninteraktiven Folie mit der Substratschicht, um die dünne Schicht zwischen der wärmestabilen Kunststoffolie und der Substratschicht anzuordnen.

10. Verfahren nach Anspruch 9, wobei die mikrowelleninteraktive Folie mit der Substratschicht in einem kontinuierlichen Verfahren in Reihe mit dem Behandlungsschritt (b) gebunden wird.

11. Verfahren nach Anspruch 9 oder 10, wobei die inaktivierende Chemikalie ein Tensid aufweist.

12. Verfahren nach einem der Ansprüche 9 bis 11, wobei die inaktivierende Chemikalie auf die dünne Schicht durch ein Verfahren aufgedruckt wird, das aus Rotationstiefdruck-, Flexodruck- und Lithographie-Technik ausgewählt ist.

13. Verfahren nach Anspruch 12, wobei die inaktivierende Chemikalie auf die dünne Schicht mit einer Flexodruck-Technik aufgedruckt wird.

14. Behälter zum Verpacken von diversen verschiedenen Nahrungsmitteln, Lagern dieser Nahrungsmittel und Erhitzen dieser Nahrungsmittel durch Mikrowellenenergie, wobei der Behälter mikrowelleninteraktive Schichtheizelemente, die mikrowelleninteraktive Folien haben, nach einem der Ansprüche 1 bis 4 aufweist, wobei das Muster der desaktivierten und der Heizbereiche (14, 12) gewählt ist, um die optimale Temperatur zu erzeugen, die zum Bräunen oder Herstellen einer Kruste jedes Nahrungsmittels notwendig ist.

## Revendications

1. Film ayant une interaction avec les micro-ondes, comprenant une pellicule de matière plastique (22) qui est thermostable et revêtue d'une couche de substance (24) ayant une interaction avec les micro-ondes de manière à former ledit film (26) ayant une interaction avec les micro-ondes et comprenant une zone ou des zones (14) désactivées ayant une aptitude réduite à générer de la chaleur en réponse à une radiation de micro-ondes, ainsi qu'une zone ou des zones (12) de chauffage ayant une aptitude inchangée à générer de la chaleur en réponse à une radiation de micro-ondes, lesdites zones étant disposées suivant un motif prédéterminé,
caractérisé en ce que l'aptitude réduite de la zone ou des zones désactivées (14) à générer de la chaleur en réponse à une radiation de micro-ondes est produite par réduction ou élimination par voie chimique des propriétés d'interaction avec les micro-ondes d'une zone ou de zones de la couche (24) ayant une interaction avec les micro-ondes par un produit chimique d'inactivation sans éliminer le produit chimique d'inactivation ni la substance inactivée de la couche (24) ayant une interaction avec les micro-ondes, le produit chimique d'inactivation étant choisi dans le groupe consistant en solutions aqueuses d'agents chélateurs, de sels de Zr⁺⁴, d'amines et d'hydroxyamines, des bases diluées, des acides dilués, des solutions aqueuses de sels métalliques et des mélanges de ceux-ci, suivie d'un séchage.

2. Film ayant une interaction avec les micro-ondes selon la revendication 1, dans lequel les agents chélateurs constituant des produits chimiques d'inactivation sont choisis dans le groupe consistant en l'acide éthylène-diaminetétraacétique, l'acide diéthylène-triaminepentacétique et l'acide hydroxyéthylène-diaminetriacétique ; les sels de Zr⁺⁴ sont choisis dans le groupe consistant en le carbonate d'ammonium et de zirconium, le lactate de sodium et de zirconium, le lactate d'ammonium et de zirconium et le tartrate de zirconium ; les amines et hydroxyamines sont choisies dans le groupe consistant en l'éthanolamine, la diéthanolamine, la triéthanolamine, la choline et des sels d'éthanolamines et de choline ; les bases diluées étant choisies dans le groupe consistant en l'hydroxyde de potassium, l'hydroxyde de sodium, l'hydroxyde de lithium, les carbonates de sodium et de potassium et des phosphates de sodium et de potassium ; les acides dilués sont choisis dans le groupe consistant en les acides acétique, formique, chlorhydrique, fluorhydrique, citrique, tartrique, oxalique et succinique et des sels de ceux-ci ; et lesdits sels métalliques sont choisis dans le groupe consistant en le chlorure ferrique, le sulfate ferrique, le chlorure ferreux, le sulfate d'ammonium ferreux, le fluorure d'ammonium, le fluorure de sodium, le chlorure de zinc, l'oxyde de zinc et le fluorure de zinc.

3. Film ayant une interaction avec les micro-ondes selon la revendication 1 ou la revendication 2, dans lequel ladite zone ou lesdites zones désactivées (14) sont disposées en alternance avec ladite zone ou lesdites zones (12) de chauffage suivant un dessin en grille.

4. Film ayant une interaction avec les micro-ondes selon l'une quelconque des revendications 1 à 3, dans lequel ladite substance ayant une interaction avec les micro-ondes est choisie dans le groupe consistant en le fer, le nickel, le cuivre, l'argent, le carbone, l'acier inoxydable, un alliage de chrome et de nickel, la magnétite, le zinc, l'étain, le tungstène, le titane et l'aluminium.

5. Stratifié ayant une interaction avec les micro-ondes et comprenant un film ayant une interaction avec les micro-ondes selon l'une quelconque des revendications précédentes, dans lequel le film (26) ayant une interaction avec les micro-ondes est supporté par une couche de substrat (28), la couche de substrat (28) étant liée au film (26) de façon que la couche de substance (24) ayant une interaction avec les micro-ondes se trouve entre la pellicule (22) et la couche de substrat (28).

6. Stratifié ayant une interaction avec les micro-ondes selon la revendication 5, dans lequel la couche de substrat (28) est choisie dans le groupe consistant en le carton, des papiers et des matières composites comprenant des fibres et des polymères.

7. Stratifié ayant une interaction avec les micro-ondes selon l'une des revendications 5 et 6, dans lequel ladite couche de substrat est liée audit film ayant une interaction avec les micro-ondes par un adhésif choisi dans le groupe consistant en des émulsions acryliques à base d'eau et des émulsions de caséine et de néoprène.

8. Stratifié ayant une interaction avec les micro-ondes selon l'une quelconque des revendications 5 à 7, destiné à être introduit dans un récipient destiné à l'emmagasinage et à la cuisson par l'énergie de micro-ondes d'un produit alimentaire qu'il contient.

9. Procédé de formage d'un élément chauffant stratifié ayant une interaction avec les micro-ondes et comprenant un film ayant une interaction avec les micro-ondes selon l'une quelconque des revendications 5 à 8, qui est sélectivement sensible à la radiation de micro-ondes pour être utilisé dans la cuisson par micro-ondes de produits alimentaires comprenant des parties qui exigent d'être dorées ou chauffées à des degrés différents, ledit procédé comprenant les étapes de
(a) dépôt d'une couche mince d'une substance ayant une interaction avec les micro-ondes sur un côté d'une pellicule de matière plastique qui est thermostable ;
(b) traitement d'une zone sélectionnée de ladite couche mince par un produit chimique d'inactivation en quantité suffisante à convertir ladite zone sélectionnée en une zone inactivée ayant une aptitude réduite à générer de la chaleur en réponse à l'énergie de micro-ondes ; et
(c) liaison dudit film ayant une interaction avec les micro-ondes et traité selon l'étape (b) à ladite couche de substrat de manière à placer ladite couche mince entre ladite pellicule de matière plastique thermostable et ladite couche de substrat.

10. Procédé selon la revendication 9, suivant lequel ledit film ayant une interaction avec les micro-ondes est lié à ladite couche de substrat en un processus continu à la suite de ladite étape de traitement (b).

11. Procédé selon la revendication 9 ou 10, suivant lequel ledit produit chimique d'inactivation comprend un agent tensioactif.

12. Procédé selon l'une quelconque des revendications 9 à 11, suivant lequel ledit produit chimique d'inactivation est imprimé sur ladite couche mince par un processus choisi parmi les techniques de rotogravure, de flexographie et de lithographie.

13. Procédé selon la revendication 12, suivant lequel ledit produit chimique d'inactivation est imprimé sur ladite couche mince par une technique d'impression par flexographie.

14. Récipient d'emballage de plusieurs aliments différents, d'emmagasinage desdits aliments et de cuisson desdits aliments par l'énergie de micro-ondes, ledit récipient comprenant des éléments chauffants stratifiés qui ont une interaction avec les micro-ondes et incluent des films ayant une interaction avec les micro-ondes selon l'une quelconque des revendications 1 à 4, dans lequel le motif des zones désactivées et de chauffage (14, 12) est choisi de manière à produire la température optimale exigée pour dorer ou rendre croustillant chaque aliment.
